# EUROPEAN PATENT SPECIFICATION

(11) **EP 3 995 760 B1**
(45) Date of publication and mention of the grant of the patent: **20.12.2023**
(21) Application number: 20205894.7
(22) Date of filing: 05.11.2020
(51) Int. Cl.: F25B 41/20, F25B 6/04, F25B 13/00

(54) **THERMAL STORAGE UNIT FOR A REFRIGERATION APPARATUS WITH A THERMAL STORAGE AND USING CO2 AS REFRIGERANT**
WÄRMESPEICHEREINHEIT FÜR EIN KÜHLGERÄT MIT EINEM WÄRMESPEICHER UND VERWENDUNG VON CO2 ALS KÄLTEMITTEL
UNITÉ DE STOCKAGE THERMIQUE POUR UN APPAREIL DE RÉFRIGÉRATION À STOCKAGE THERMIQUE ET UTILISANT DU CO2 COMME RÉFRIGÉRANT

(43) Date of publication of application: 11.05.2022
(73) Proprietor: DAIKIN INDUSTRIES, LTD., Osaka-Shi, Osaka 530-0001 (JP); Daikin Europe N.V., 8400 Oostende (BE)
(72) Inventor: Yamaguchi, Takahiro, 8400 Oostende (BE); Vandaele, Stefan, 8400 Oostende (BE); Van de Velde, Kris, 8400 Oostende (BE)
(74) Representative: Hoffmann Eitle

(56) References cited:
- EP-A1- 1 550 830
- EP-A1- 3 242 096
- US-A- 4 727 726

## Description

### TECHNICAL FIELD

The present invention relates to a refrigerant circuit for cooling and/or heating purposes.

In particular, the invention relates to a refrigerant circuit for a refrigeration apparatus with a thermal storage particularly a thermal storage with a phase changing material (PCM). Even more particular, the invention relates to a refrigerant circuit for a refrigeration apparatus with a thermal storage using CO₂ as a refrigerant.

### BACKGROUND

As described in EP 2 402 681 A1, conventionally, a refrigerating apparatus has been known, which includes a refrigerant circuit performing a refrigeration cycle. The refrigerating apparatus of this type has been widely used for coolers such as refrigerators and freezers for storing food etc. and air conditioners for cooling/heating an inside of a room.

Moreover, EP 2 844 924 B1 discloses an air-conditioning system comprising: a chiller system including a compressor, a condenser, an expansion device and an evaporator, a phase change material in thermal communication with the condenser, an actuator coupled to the phase change material; and a controller providing a trigger signal to the actuator to initiate changing the phase change material from a supercooled state to a solid state, wherein the phase change material includes a coolant supply line in thermal communication with the phase change material and the coolant supply line is coupled to the chiller system. The phase change material is selected so that the phase change material transitions from liquid to solid when cooling demand on the chiller system is low or non-existent. This may occur in the evening, when ambient temperatures are lower. During the day, the solid or frozen phase change material absorbs energy from the condenser, improving the efficiency of the condenser when the chiller system is running and increasing efficiency and capacity of the chiller system.

The air-conditioning system described in EP 2 844 924 B1 aims to provide a system that is capable of balancing cooling demand by using a phase change material as a heat buffer between the condenser and the ambient air temperature. During the day, the phase change material absorbs the heat from the condenser and release it to the outside air. Due to its thermal capacity and the latent heat release, the phase change material will heat up slower than air and thus result in higher energy efficiency. At night, the phase change material is cooled down faster by the fresher air temperature using the fan only.

However, active cooling of the phase change material with the fan is inefficient, therefore, said system is particularly not suitable for regions with warmer climates, where air temperatures at night remain high. Moreover, the described system is not able to realize big improvements with regard to energy efficiency but will "flatten out" the energy consumption pattern due to the thermal response time of the phase change material. This is in particular true, since the active cooling of the phase change material also causes heating of the condenser, as the condenser is in thermal communication with the phase change material, and no control of the use of the phase change material is possible.

Additionally, fluorocarbon has been conventionally used as a refrigerant in refrigeration systems. However, following the Montreal Protocol in 1987 and the Kyoto Protocol in 1997, artificially developed substitute chlorofluorocarbons, whose ozone depletion potential is low, have become commonly used as refrigerants. Yet, in recent years, the development of technology using even more environmentally friendly substitutes, particularly using natural refrigerants such as carbon dioxide, ammonia, hydrocarbons (isobutene, propane, etc.), water and air, has progressed. These natural refrigerants are materials that have the property that, when compared with the aforementioned chlorofluorocarbons and substitute chlorofluorocarbons, their GWP (Global Warming Potential) value is extremely low.

Among these, carbon dioxide is known as a material whose ozone depletion potential is zero, whose global warming potential is also much lower in comparison to conventional refrigerants, which has no toxicity, is non-flammable, and whose efficiency in creating a high temperature is good among natural refrigerants, and from environmental/energy aspects and safety aspects, carbon dioxide is garnering attention as a refrigerant in air conditioners.

However, carbon dioxide (CO₂) performs at high outside temperatures with a lower efficiency than fluorinated refrigerants. Accordingly, on an annual base the performance of an air conditioner system using CO₂ as a refrigerant is lower compared to fluorinated refrigerants, particularly in warmer climates.

Other related art may be found in EP 3 242 096 A1 being directed to a regenerative air conditioner comprising a refrigerant circuit to which a compressor section, an outdoor heat exchanger and an indoor heat exchanger are connected; and a thermal storage section in which heat is exchanged between the refrigerant in the refrigerant circuit and a thermal storage medium. EP 2 242 096 A1 also shows a thermal storage unit according to the preamble of claim 1.

### SUMMARY

In view of the above, there is the desire to provide a refrigerant circuit for a refrigeration apparatus with a thermal storage, which is using carbon dioxide (CO₂) as refrigerant, allowing the storage of thermal energy, particularly cold, for example when outside temperatures are low, preferably during the night, and use the thermal energy during peak temperatures during the day when transcritical conditions occur or during peak demand, in order to substantially prevent a decrease in cooling efficiency, which is particularly due to the use of a natural refrigerant like carbon dioxide, while ensuring a high cooling capacity and providing flexibility with regard to charging the thermal storage with cold. Additionally, if circumstances require it or allow it, the provided refrigerant circuit should also be able to store thermal energy, particularly cold, even during peak temperatures when for example much/excess PV power (CO₂ neutral energy generation) is available.

According to the invention this aim is achieved by a thermal storage unit as defined in claim 1 and used for a refrigeration apparatus using CO₂ as refrigerant. Preferred embodiments of the thermal storage unit are the subject of the dependent claims.

As regards the term "natural" concerning the "natural refrigerant", the term defines in the present disclosure refrigerants that occur naturally.

Moreover, in the present disclosure the term "fluid" concerning the "fluid communication pipe(s)" and the "fluid port(s)" is used as the fluid, particularly the CO₂, flowing there through is in a supercritical condition (supercritical fluid), which means, the fluid is at a temperature and pressure above its critical point, where distinct liquid and gas phases do not exist. Accordingly, the "fluid communication pipe(s)" and the "fluid port(s)" are common "liquid communication pipe(s)" and "liquid port(s)", only emphasizing that the fluid flowing there through is in a supercritical condition.

The thermal storage unit may further include a refrigerant heat exchange pipe disposed inside the thermal storage, particularly inside the thermal storage material, wherein the first switching mechanism communicates with one side of the refrigerant heat exchange pipe and the second switching mechanism communicates with the other end of the refrigerant heat exchange pipe.

Moreover, the first switching mechanism includes: a first valve, which is a three-way valve, communicating among the second thermal storage unit fluid port, the third thermal storage unit fluid port and the thermal storage, and preferably a second valve, which is a three-way valve and located/provided between the first valve and the thermal storage, communicating among the first valve, the thermal storage and the thermal storage unit gas port, wherein the first switching mechanism preferably further comprises a check valve that is located/provided between the first valve and the third thermal storage unit fluid port.

Alternatively, the first switching mechanism includes a first valve, which may be a four-way valve, communicating among the second thermal storage unit fluid port, the thermal storage, the thermal storage unit gas port and the third thermal storage unit fluid port, wherein the first switching mechanism further includes a check valve that stops a backflow from the third thermal storage unit fluid port to the first valve.

The second switching mechanism may be a valve, which is a three-way valve, communicating among the first thermal storage unit fluid port, the third thermal storage unit fluid port and the thermal storage, wherein preferably an expansion device is located/provided between the second switching mechanism and the first thermal storage unit fluid port.

An expansion device is located/provided on the fourth thermal storage unit fluid communication pipe.

Moreover, a check valve is located/provided on the third thermal storage unit fluid communication pipe and stops a backflow from the third thermal storage unit fluid port to the first switching mechanism, particularly a/the first valve.

The second thermal storage unit fluid communication pipe may be connected with the third thermal storage unit fluid communication pipe between the third thermal storage unit fluid port and the check valve.

The thermal storage unit may further include a thermal storage unit gas communication pipe communicating between the thermal storage unit gas port and the first switching mechanism, particularly a/the second valve.

Furthermore, the thermal storage material is a phase changing material (PCM) from the group: organic PCMs like bio-based, paraffin, carbohydrate or lipid derived, or water.

The thermal storage unit may further include a heat exchanger, particularly a plate heat exchanger, which is on one side communicating with the first switching mechanism and the second switching mechanism and on the other side with the one side of the thermal storage and the other side of the thermal storage.

Furthermore, the thermal storage unit may further include a circulating pump that is located/provided on the first thermal storage unit fluid communication pipe or the second thermal storage unit fluid communication pipe, between the heat exchanger and the thermal storage.

The thermal storage unit may further include a water circuit, a refrigerant to phase change material (PCM) circuit or a refrigerant to water to phase change material (PCM) circuit having a heat exchanger, particularly a plate heat exchanger, and a circulating pump.

The thermal storage unit is a unit that can be used for a refrigerant circuit. Therefore, the further features disclosed in connection with the above description of the thermal storage unit may also be applied to the refrigerant circuit. The same applies vice versa for the thermal storage unit.

### BRIEF DESCRIPTION OF THE DRAWINGS

A more complete appreciation of the present invention and many of the attendant advantages thereof will be readily obtained as the same becomes better understood by reference to the following detailed description when considered in connection with the accompanying drawings.
Fig. 1 shows a conventional air-conditioning system having a supercooled phase change material (PCM);
Fig. 2 is a refrigerant circuit diagram illustrating a configuration of a refrigerant circuit;
Fig. 3 is a refrigerant circuit diagram illustrating a configuration of a thermal storage unit of a fist embodiment of the invention;
Fig. 4 is a refrigerant circuit diagram illustrating a configuration of a thermal storage unit of a second embodiment of the invention;
Fig. 5 is a refrigerant circuit diagram illustrating a configuration of a thermal storage unit of a third embodiment of the invention;
Fig. 6 is a refrigerant circuit diagram illustrating a configuration of a heat exchange unit;
Fig. 7 is a refrigerant circuit diagram illustrating a configuration of a refrigeration apparatus during a normal refrigeration and cooling operation;
Fig. 8 is a refrigerant circuit diagram illustrating the refrigeration apparatus of Fig. 7 during a refrigeration operation using the thermal storage;
Fig. 9 is a refrigerant circuit diagram illustrating the refrigeration apparatus of Fig. 7 during a refrigeration and cooling operation using the thermal storage;
Fig. 10 is a refrigerant circuit diagram illustrating the refrigeration apparatus of Fig. 7 during an only charging operation of the thermal storage;
Fig. 11 is a refrigerant circuit diagram illustrating the refrigeration apparatus of Fig. 7 during a refrigeration operation while charging the thermal storage;
Fig. 12 is a refrigerant circuit diagram illustrating a configuration of another refrigeration apparatus having a capacity increasing unit;
Fig. 13 is a refrigerant circuit diagram illustrating a capacity increasing unit; and
Fig. 14 is a refrigerant circuit diagram illustrating a combi unit having a capacity increasing unit and a thermal storage unit.

### DETAILED DESCRIPTION

Several embodiments of the present invention will now be explained with reference to the drawings. It will be apparent to those skilled in the field of air-conditioning from this disclosure that the following description of the embodiments is provided for illustration only and not for the purpose of limiting the disclosure as defined by the appended claims.

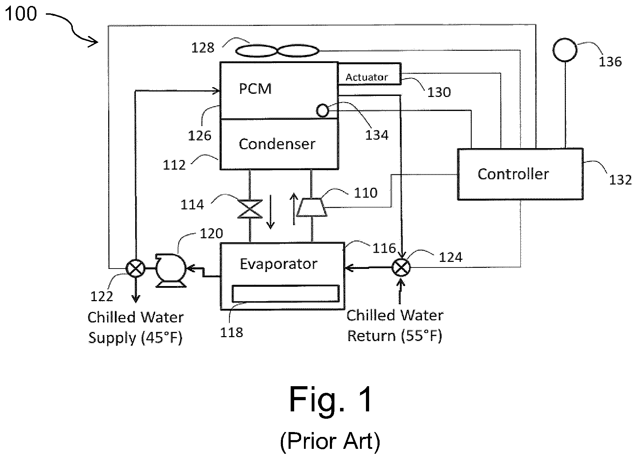

Figure 1 shows a conventional air-conditioning system 100 having a supercooled phase change material (PCM). A chiller system includes a compressor 110, a first heat exchanger 112, an expansion device 114 and a second heat exchanger 116. The first heat exchanger 112 may be used as a condenser coil and may be located outside of a building or space to be conditioned. The second heat exchanger 116 may be used as an evaporator coil. As known in the art, refrigerant is subjected to a vapor compression cycle through compressor 110, condenser 112, expansion device 114 and evaporator 116. Heat is absorbed at evaporator 116 and heat is discharged at condenser 112.

The system of Fig. 1 may be a water chiller system. Evaporator 116 is in thermal communication with a heat exchanger 118 (e.g., a coil) that carries a fluid coolant, e.g., water. A supply pump 120 circulates coolant from heat exchanger 118 cooled by evaporator 116 to a supply valve 122. Supply valve 22 supplies chilled water to a local zone terminal where a fan draws air over a coil to chill a space as known in the art. A return valve 124 receives fluid returned from the local zone terminal and provides the return fluid to heat exchanger 118.

Moreover, the condenser coil 112 as shown in Fig. 1 is in thermal communication with a phase change material 126. A fan 128 draws air through the phase change material 126 to aid in cooling the phase change material 126. A controller 132 then initiates the transition of the phase change material 126 from supercooled liquid to solid. An actuator 130 is used to initiate the transition of the phase change material 126 from supercooled liquid to solid when the phase change material 126 is in a supercooled state. The actuator 130 includes a thermoelectric cooler for freezing the phase change material 126. Controller 132 receives a phase change material temperature signal from a phase change material sensor 134 and an ambient temperature signal from an ambient temperature sensor 136.

The phase change material 126 is selected so that the phase change material transitions from liquid to solid when cooling demand on the chiller system is low or non-existent. This may occur in the evening, when ambient temperatures are low. During the day, the solid or frozen phase change material 126 absorbs energy from the condenser 112 when the chiller system is running and increasing efficiency and capacity of the chiller system.

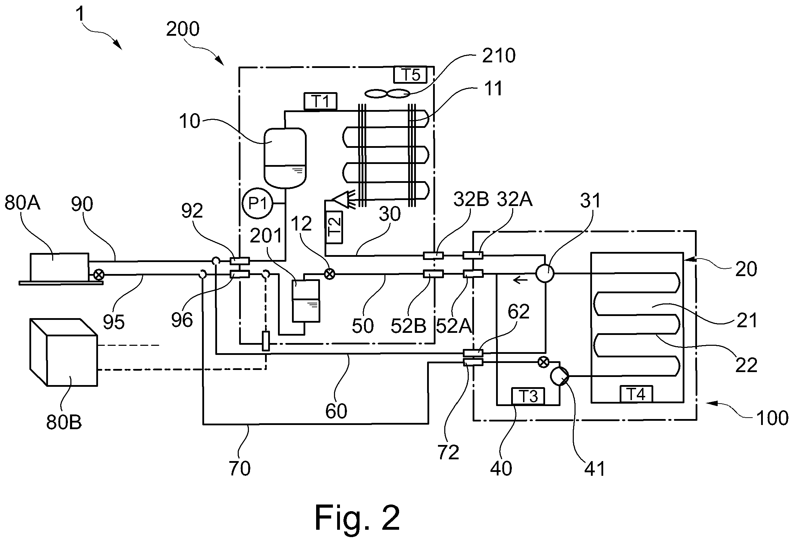

Furthermore, Fig. 2 is a refrigerant circuit 1 diagram illustrating a configuration of a refrigerant circuit The shown refrigerant circuit uses CO₂ as refrigerant and includes one compressor 10, a heat-source-side heat exchanger of an outdoor unit of a so called "Conveni-Pack", including usually coolers such as refrigerators and freezers for storing food etc. and air conditioners (indoor units) for cooling/heating an inside of a room, particularly a show room/shopping room. In the shown refrigerant circuit only one indoor unit and one cooler are illustrated as example, but the refrigerant circuit can naturally include several coolers and air conditioners. The shown refrigerant circuit further includes a thermal storage unit 100 and a heat exchange unit 200, which will be explained later in more detail. The thermal storage unit 100 includes a thermal storage 20 including/accumulating a thermal storage material 21, which is a phase changing material (PCM). The shown refrigerant circuit further includes a first fluid communication pipe 30 that connects a fluid side of the heat-source-side heat exchanger 11 with one side of the thermal storage 20 and a second fluid communication pipe 40 that connects the expansion device 12 and the other side of the thermal storage 20.

In this regard, the term "connect" is used in the present disclosure to define that two entities, for example the "one side of the thermal storage" and the "thermal storage", are connected with each other by a connecting means such as a "liquid pipe" or a "gas pipe" in such a manner that a fluid like a refrigerant can be liquid-tight and gas-tight transferred/exchanged/flow from one entity to the other one. In other words, the connecting means provides a fluidic connection.

The refrigerant circuit 1 further includes a first switching mechanism 31, which is located on the first fluid communication pipe 30 and fluidically connects the heat-source-side heat exchanger 11, the thermal storage 20, a third fluid communication pipe 50 and a first gas communication pipe 60 with each other, wherein the third fluid communication pipe 50 is fluidically connecting to the expansion device 12 and the first gas communication pipe 60 is fluidically connecting to a suction side of the compressor 10.

The shown refrigerant circuit 1 further includes a second switching mechanism 41 located on the second fluid communication pipe 40 and fluidically connects the thermal storage 20, the expansion device 12 and a fourth fluid communication pipe 70 with each other, wherein the fourth fluid communication pipe 70 is fluidically connecting to a utilization-side heat exchanger 80A.

Fig. 2 also shows that the refrigerant circuit 1 further comprises a receiver 201, which is located on the third fluid communication pipe 50, between the expansion device 12 and the utilization-side heat exchanger 80A, wherein the receiver 201 is configured to separate the refrigerant coming from the expansion device in a subcritical state into liquid refrigerant and gas refrigerant.

The shown refrigerant circuit 1 also indicates that the refrigerant circuit 1 can further include an additional utilization-side heat exchanger 80B communicating on its liquid side with the expansion device 12 via the receiver 201 and on its gas side with the compressor 10.

As illustrated in Fig. 2, the utilization-side heat exchanger 80A can be a heat exchanger of an air-conditioner, particularly of an indoor unit, and the additional utilization-side heat exchanger 80B can be a heat exchanger of a cooler such as a refrigerator or a freezer.

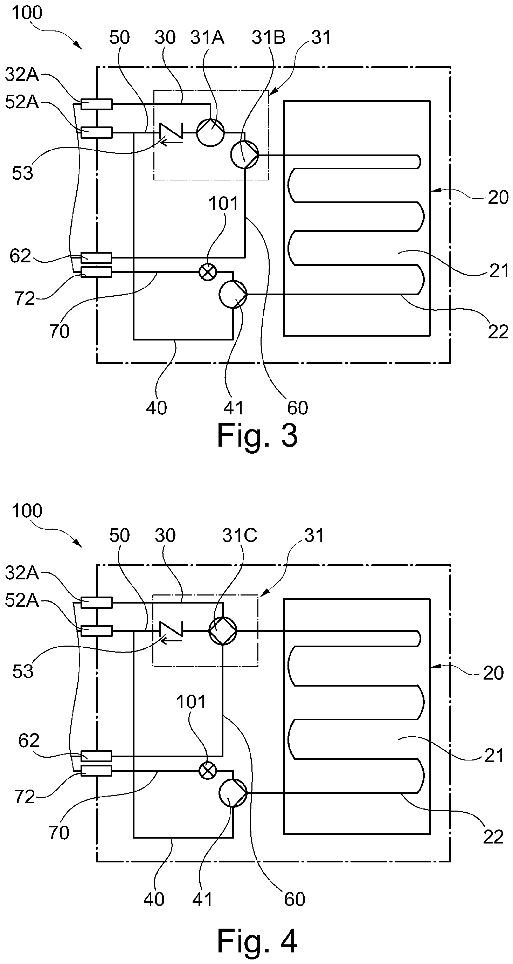

Fig. 3 is a refrigerant circuit diagram illustrating a configuration of a thermal storage unit of a fist embodiment. The shown thermal storage unit 100 is part of the above described refrigerant circuit 1, wherein the switching mechanism 1 is configured according to a first alternative.

The shown thermal storage unit 100 includes the thermal storage 20 including the above described thermal storage material 21, which is a phase changing material (PCM), a thermal storage unit gas port 62 communicating to the utilization-side heat exchanger 80A, disposed outside the thermal storage unit 100, a first thermal storage unit fluid port 72 communicating to the utilization-side heat exchanger 80A, a second thermal storage unit fluid port 32A communicating to the heat-source-side heat exchanger 11, disposed outside the thermal storage unit 100, and a third thermal storage unit fluid port 52A communicating to the expansion device 12 disposed outside the thermal storage unit 100.

The shown thermal storage unit 100 further includes the first switching mechanism 31 communicating among the second thermal storage unit fluid port 32A, the third thermal storage fluid port 52A, the thermal storage unit gas port 62 and one side of the thermal storage 20, and the second switching mechanism 41 communicating among the first thermal storage unit fluid port 72, the third thermal storage unit fluid port 52A and the other side of the thermal storage 20.

Moreover, the in Fig. 3 shown thermal storage unit 100 further includes a refrigerant heat exchange pipe 22 that is disposed inside the thermal storage 20, particularly inside the thermal storage material 21. The first switching mechanism 31 is fluidically connected with one side of the refrigerant heat exchange pipe 22 and the second switching mechanism 41 is fluidically connected with the other end of the refrigerant heat exchange pipe 22.

According to the shown embodiment, the first switching mechanism 31 includes: a first valve 31A, which is a three-way valve, communicating among the second thermal storage unit fluid port 32A, the third thermal storage unit fluid port 52A and the thermal storage 20, and a second valve 31B, which is a three-way valve and located between the first valve 31A and the thermal storage 20, communicating among the first valve 31A, the thermal storage 20 and the thermal storage unit gas port 62.

Between the first valve 31A and the third thermal storage unit fluid port 52A is a check valve 31A provided that stops a backflow from the third thermal storage unit fluid port 52A to the first valve 31A.

The shown second switching mechanism 41 is a valve, which is a three-way valve, fluidically connecting the first thermal storage unit fluid port 72, the third thermal storage unit fluid port 52A and the thermal storage 20 with each other, wherein an expansion device 101 is located between the second switching mechanism 41 and the first thermal storage unit fluid port 72.

The second thermal storage unit fluid communication pipe 40 is connected with the third thermal storage unit fluid communication pipe 50 between the third thermal storage unit fluid port 52A and the check valve 53. A thermal storage unit gas communication pipe 60 fluidically connects the thermal storage unit gas port 62 and the first switching mechanism 31, particularly the second valve 31B, with each other.

Fig. 4 is a refrigerant circuit diagram illustrating a configuration of the thermal storage unit 100 according to a second embodiment, particularly an alternative configuration. The illustrated refrigerant circuit corresponds to the refrigerant circuit disclosed in Fig. 3 except the configuration of the first switching mechanism. In the shown alternative configuration, the first first valve 31A is a four-way valve that fluidically connects the second thermal storage unit fluid port 32A, the thermal storage 20, the thermal storage unit gas port 62 and the third thermal storage unit fluid port 52A.

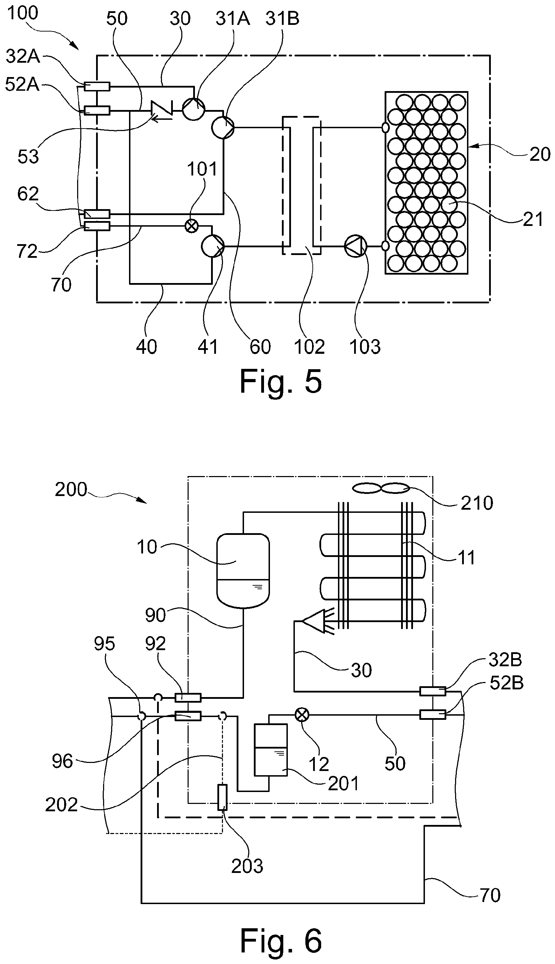

Fig. 5 is a refrigerant circuit diagram illustrating a configuration of a thermal storage unit 100 according to a third embodiment, particularly a third alternative. The shown alternative does not use the above described refrigerant heat exchange pipe 22, instead uses a heat exchanger 102. As shown, the heat exchanger 102 is preferably a plate heat exchanger, which is on one side communicating with the first switching mechanism 31 and the second switching mechanism 41 and on the other side with the one side of the thermal storage 20 and the other side of the thermal storage 20.

Additionally, the thermal storage unit 100 includes a circulating pump 103 that is located on the second thermal storage unit fluid communication pipe 40, between the heat exchanger 102 and the thermal storage 20. Accordingly, the thermal storage has a closed loop, particularly using water as coolant. The circulating pump circulates the coolant through the thermal storage 20, thereby the coolant exchanges heat with the thermal storage material 21 of the thermal storage, and then to the heat exchanger 102, where the coolant again exchanges heat with the refrigerant of the refrigerant circuit 1. Hence, the circulating pump 103 is able to control the amount of thermal energy exchanged between the thermal storage 20, particularly the thermal storage material 21, and the refrigerant of the refrigerant circuit 1.

The in connection with Fig. 5 described embodiment can be combined with both alternatives with regard to the first switching mechanism, namely a first three-way valve or four-way valve 31A.

Fig. 6 is a refrigerant circuit diagram illustrating a configuration of a heat exchange unit 200 The shown heat exchange unit 200 includes the compressor 10, the heat-source-side heat exchanger 11 the expansion device 12, a heat exchange unit gas port 92 communicating to the utilization-side heat exchanger 80A disposed outside the heat exchange unit 200, a first heat exchange unit fluid port 96 communicating to the utilization-side heat exchanger 80A, a second heat exchange unit fluid port 32B communicating to the heat-source-side heat exchanger 11, a third heat exchange unit fluid port 52B communicating to the expansion device 12. The shown second heat exchange unit fluid port 32B is fluidically connected to the above described thermal storage unit 100 disposed outside the heat exchange unit 200 and the third heat exchange unit fluid port 52B is also fluidically connected to the thermal storage unit 100.

The shown heat exchange unit 200 further includes a heat exchange unit gas communication pipe 90 communicating between the heat exchange unit gas port 92 and the at least one compressor 10, a first heat exchange unit fluid communication pipe 30 communicating between the second heat exchange unit fluid port 32B and the heat-source-side heat exchanger 11, and a second heat exchange unit fluid communication pipe 50 communicating between the third heat exchange unit fluid port 52B and the first heat exchange unit fluid port 96.

The expansion device 12 is located on the second heat exchange unit fluid communication pipe 50, between the first heat exchange unit fluid port 96 and the third heat exchange unit fluid port 52B.

The shown heat exchange unit 200 further includes the above described receiver 201, which is located on the second heat exchange unit fluid communication pipe 50, between the first heat exchange unit fluid port 96 and the expansion device 12, wherein the receiver 201 is configured to separate liquid refrigerant and gas refrigerant. The heat exchange unit 200 further includes a fourth heat exchange unit fluid port 203 fluidically connecting the expansion device 12 and the additional utilization-side heat exchanger 80B disposed outside the heat exchange unit 200.

The shown heat exchange unit 200 further includes a third heat exchange unit fluid communication pipe 202 fluidically connecting the fourth heat exchange unit fluid port 203 with the expansion device 12 and is connected with the second heat exchange unit fluid communication pipe 50 between the first heat exchange unit fluid port 96 and the receiver 201.

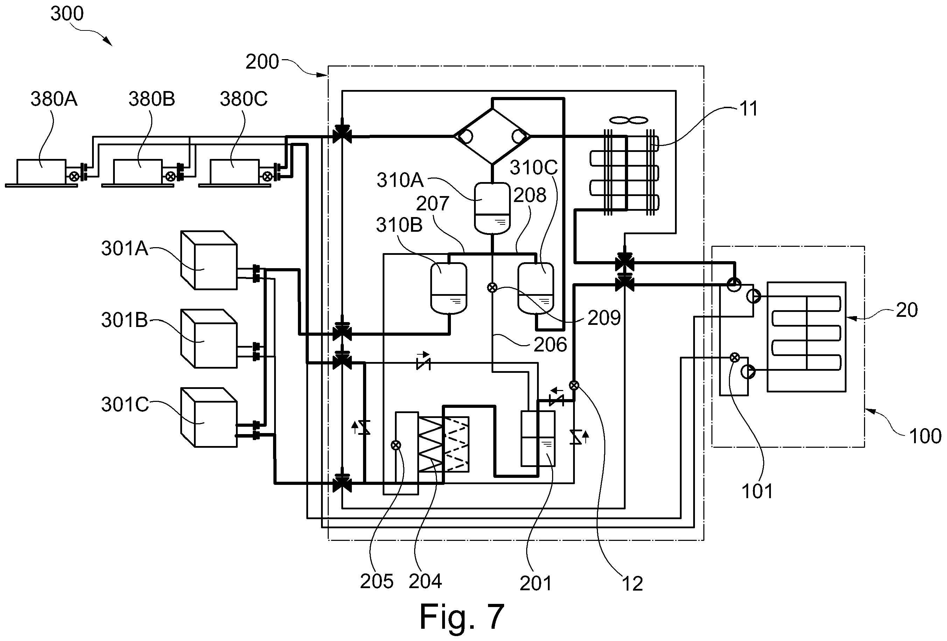

Fig. 7 is a refrigerant circuit diagram illustrating a configuration of a refrigeration apparatus 300 during a normal refrigeration and cooling operation. The shown refrigeration apparatus 300 includes the above described refrigerant circuit 1, the thermal storage unit 100 and the heat exchange unit 200, which are further detailed for explanatory purposes.

The shown heat exchange unit 200 further includes a subcooling heat exchanger 204, which is located between the first heat exchange unit fluid port 96 and the receiver 201. The refrigeration apparatus 300 includes three coolers such as refrigerators and freezers for storing food etc. and three air conditioners (indoor units) for cooling/heating an inside of a room, particularly a show room/shopping room. The three indoor units are each provided with one utilization-side heat exchanger 380A - 380C and the three refrigerators are each provided with one additional utilization-side heat exchanger 301A - 301C.

Additionally, the shown heat exchange unit 200 further includes a second compressor 310B and a third compressor 310C that are provided parallel to each other and upstream of the above described compressor 10 of the basic configuration. In this way, the three compressors 310A - 310B build a two-stage compressor system, wherein the second compressor 310B communicates with the additional utilization-side heat exchangers 301A - 301C to build a refrigeration circuit and the third compressor 310C communicates with the utilization-side heat exchangers 380A - 380C to build an air-conditioning circuit. The three compressors 310A - 310C can be variable capacity compressors and/or fixed capacity compressors, depending on the requirements of the refrigerant apparatus. All of the three compressors 310A - 310C are hermetic scroll compressors.

The shown heat exchange unit 200 further includes an injection pipe 206 fluidically connecting a gas side of the receiver 201 with a suction side of the first compressor 10, 310A, wherein the injection pipe 206 is configured to inject intermediate-pressure refrigerant collected by the receiver 201 into the first compressor 10, 310A. As shown in Fig. 7, the injection pipe 206 joins with two high-pressure pipes 207, 208 communicating between high-pressure sides of the second compressor 310B and the third compressor 310C and the suction side of the first compressor 10, 310A, before connecting to a suction side of the first compressor 10, 310A.

Additionally, the injection pipe 206 is provided with an expansion device 207, which is preferably located before the connection point of the injection pipe 206 with the high-pressure pipes 207, 208.

### DESCRIPTION OF CONTROL MODES

### First Example: Normal refrigeration and cooling operation

As already mentioned above, Fig. 7 illustrates the refrigeration apparatus 300 in a normal refrigeration and cooling operation. Accordingly, all three compressors 310A - 310C are turned on, which means, the second compressor 310B draws low pressure refrigerant from the additional utilization-side heat exchangers 301A - 301C of the three coolers and the third compressor 310C draws refrigerant from the utilization-side heat exchanger 380C of one of the three indoor units. Via the high-pressure pipes 207, 208 the two compressors 310B, 310C provide intermediate-pressure refrigerant to the first compressor 310A, which further compresses the refrigerant and discharges high-pressure refrigerant which flows to the heat-source-side heat exchanger 11, which acts as a gas cooler. Such refrigerant is cooled by dissipating heat to outdoor air supplied by an outdoor fan. The high-pressure refrigerant flowing out from the heat-source-side heat exchanger 11 flows via the first fluid communication pipe 30 to the first switching mechanism 31, particularly the first valve 31A, which is a three-way valve. The three-way valve 31A is in a state, in which the first fluid communication pipe 30 is communicating with the third fluid communication pipe 50 and a flow to the second valve 31B is blocked. Hence, the high-pressure refrigerant flows directly to the expansion device 12, which is an expansion valve, without flowing through the thermal storage 20 or exchanging heat with the thermal storage 20 via the heat exchanger 102. Flowing through the expansion device 12, the pressure of the cooled high-pressure refrigerant is reduced, and the refrigerant is changed into intermediate-pressure refrigerant in a gas-liquid two-phase state (subcritical refrigerant).

Subsequently, the intermediate-pressure refrigerant flows to the receiver 201, a part of the refrigerant, particularly liquid intermediate-pressure refrigerant, flows from the receiver 201 to a first flow path 204A of the subcooling heat exchanger 204. The refrigerant flowing into the first flow path 204A is cooled by intermediate-pressure refrigerant flowing through the second flow path 204B, and the degree of subcooling of such refrigerant is increased. A part of the so subcooled liquid refrigerant flows through an expansion device 205, particularly a subcooling expansion valve, thereby reducing the pressure of the intermediate-pressure refrigerant further. The intermediate-pressure refrigerant flows into the second flow path 204B of the subcooling heat exchanger 204 and is evaporated by absorbing heat from the refrigerant flowing through the first flow path 204A of the subcooling heat exchanger 204.

The subcooled intermediate-pressure refrigerant flows so as to be branched into two main pipes providing the refrigerant to the refrigeration circuit and the air-conditioning circuit, where the refrigerant is branched again into three pipes providing the utilization-side heat exchangers 380A - 380C of the indoor units and the additional utilization-side heat exchangers 301A - 301C of the coolers with liquid refrigerant. Before entering the utilization-side heat exchangers 380A - 380C, 301A - 301C, the refrigerant flows through an expansion device, particularly an air-conditioning expansion valve or a cooler expansion valve, where the pressure of the intermediate-pressure refrigerant is reduced. Such refrigerant flows through the utilization-side heat exchangers and is evaporated by absorbing heat from example room air supplied by an air-conditioning fan of the indoor units.

The evaporated refrigerant of the utilization-side heat exchangers 380A - 380C of the indoor units is rejoined and flows via a suction pipe back to a suction side of the third compressor 310C. The evaporated refrigerant of the additional utilization-side heat exchangers 301A - 301C of the coolers is rejoined and flows via a suction pipe back to a suction side of the second compressor 310B. Thereby, the air-conditioning circuit and the refrigeration circuit are a closed loop. The evaporated refrigerant of the subcooling heat exchanger 204 is joined with intermediate-pressure refrigerant discharged from the second compressor 310B and the third compressor 310C and provided to the suction side of the first compressor 310A.

Additionally, gas intermediate-pressure refrigerant separated by the receiver 201 from the liquid intermediate-pressure refrigerant of the supercritical refrigerant, flows through an expansion device to reduce the pressure to a similar pressure as the pressure of the intermediate-pressure refrigerant discharged by the second compressor 310B and the third compressor 310C.

### Second Example: Refrigeration operation using the thermal storage

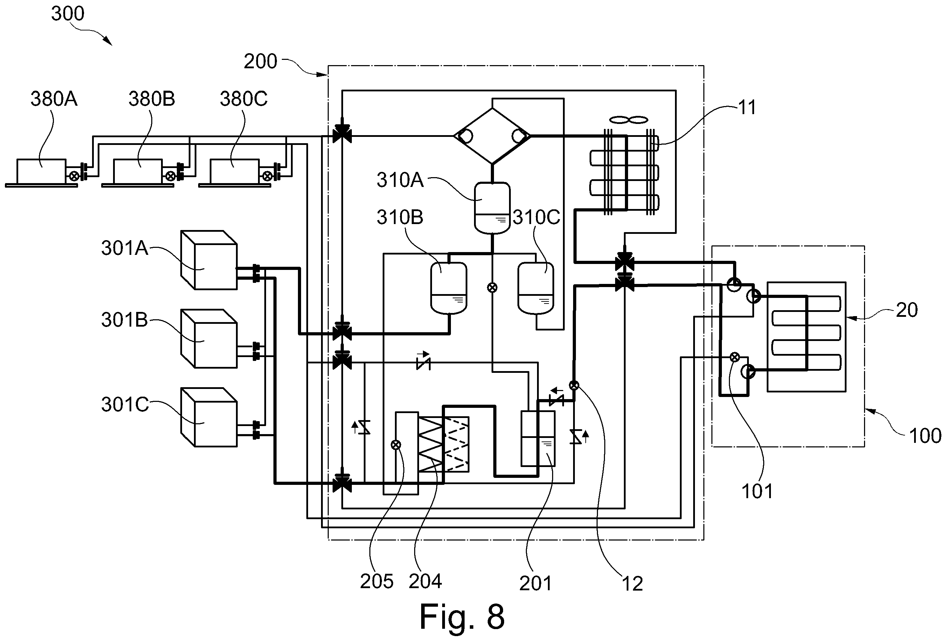

Fig. 8 is a refrigerant circuit diagram illustrating the refrigeration apparatus 300 of Fig. 7 during a refrigeration operation using the thermal storage. In this operation, the first switching mechanism 31, in particular the first and second valve, and the second switching valve are set in such a way that the high-pressure refrigerant flowing out from the heat-source-side heat exchanger 11 flows via the first fluid communication pipe 30 into the first and second valve and then into the thermal storage, thereby exchanging heat with the thermal storage 20. Flowing though the thermal storage 20 the high-pressure refrigerant is cooled. After leaving the thermal storage 20 the high-pressure refrigerant flows via the second switching mechanism via the expansion device 12 back to the receiver 201. By flowing through the expansion device 12, the pressure of the cooled high-pressure refrigerant is reduced and the refrigerant is changed into intermediate-pressure refrigerant in a gas-liquid two-phase state (supercritical refrigerant).

As described above, a part of the refrigerant, particularly liquid intermediate-pressure refrigerant, flows then from the receiver 201 to the first flow path 204A of the subcooling heat exchanger 204. The refrigerant flowing into the first flow path 204A is cooled by intermediate-pressure refrigerant flowing through the second flow path 204B, and the degree of subcooling of such refrigerant is increased. A part of the so subcooled liquid refrigerant flows through the expansion device 205 thereby reducing the pressure of the intermediate-pressure refrigerant further. The intermediate-pressure refrigerant flows into the second flow path 204B of the subcooling heat exchanger 204 and is evaporated by absorbing heat from the refrigerant flowing through the first flow path 204A of the subcooling heat exchanger 204.

The subcooled intermediate-pressure refrigerant flows then so as to provide the refrigerant only to the refrigeration circuit and not to the air-conditioning circuit, where the refrigerant is branched again into three pipes providing the additional utilization-side heat exchangers 301A - 301C of the coolers with liquid refrigerant. Before entering the additional utilization-side heat exchangers 301A - 301C, the refrigerant flows through the cooler expansion valve, where the pressure of the intermediate-pressure refrigerant is reduced. Such refrigerant flows through the additional utilization-side heat exchangers and is evaporated by absorbing heat from storage room air within the coolers.

Since the cooling operation is turned off, only the second compressor 310B and the first compressor 310A are in use, the third compressor 310 is turned off. Hence, the second compressor 310 draws low pressure refrigerant from the additional utilization-side heat exchangers 301A - 301C of the coolers and provides intermediate-pressure refrigerant via the high-pressure pipe 207 to the first compressor 310A, which further compresses the refrigerant and discharges high-pressure refrigerant which flows to the heat-source-side heat exchanger 11, which acts as a gas cooler. Such refrigerant is cooled by dissipating heat to outdoor air supplied by an outdoor fan. The high-pressure refrigerant flowing out from the heat-source-side heat exchanger 11 flows then via the first fluid communication pipe 30 back to the first switching mechanism 31, thereby closing the refrigerant circuit.

### Third Example: Refrigeration and cooling operation using the thermal storage

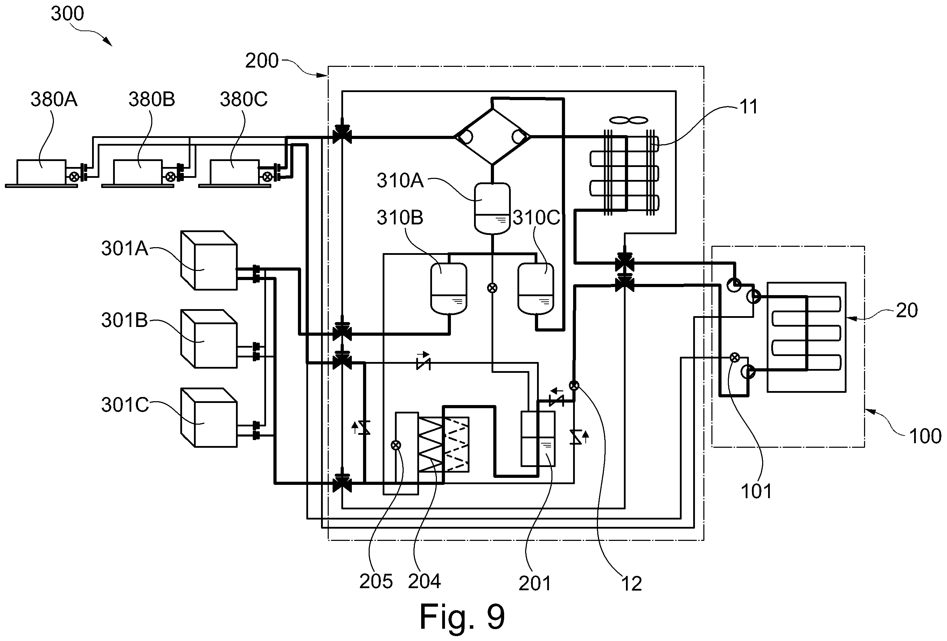

Fig. 9 is a refrigerant circuit diagram illustrating the refrigeration apparatus of Fig. 7 during a refrigeration and cooling operation using the thermal storage. The refrigeration and cooling operation using the thermal storage is similar to the above with regard to Fig 8 described refrigeration (only) operation using the thermal storage, except that all three compressors 310A to 310C are in use. Hence, the second compressor 310B draws low pressure refrigerant from the additional utilization-side heat exchangers 301A - 301C of the three coolers and the third compressor 310C draws refrigerant from the utilization-side heat exchanger 380C of one of the three indoor units, which is the provided as intermediate-pressure refrigerant to the first compressor 310A, which further compresses the refrigerant and discharges high-pressure refrigerant which flows to the heat-source-side heat exchanger 11.

Such refrigerant flows then as described above through the thermal storage 20, the expansion device 12, the receiver 201, the subcooling heat exchanger 204 and is then branched into the two main pipes providing the refrigerant to the refrigeration circuit and the air-conditioning circuit, closing the refrigerant circuit.

### Fourth Example: Only charging operation of the thermal storage

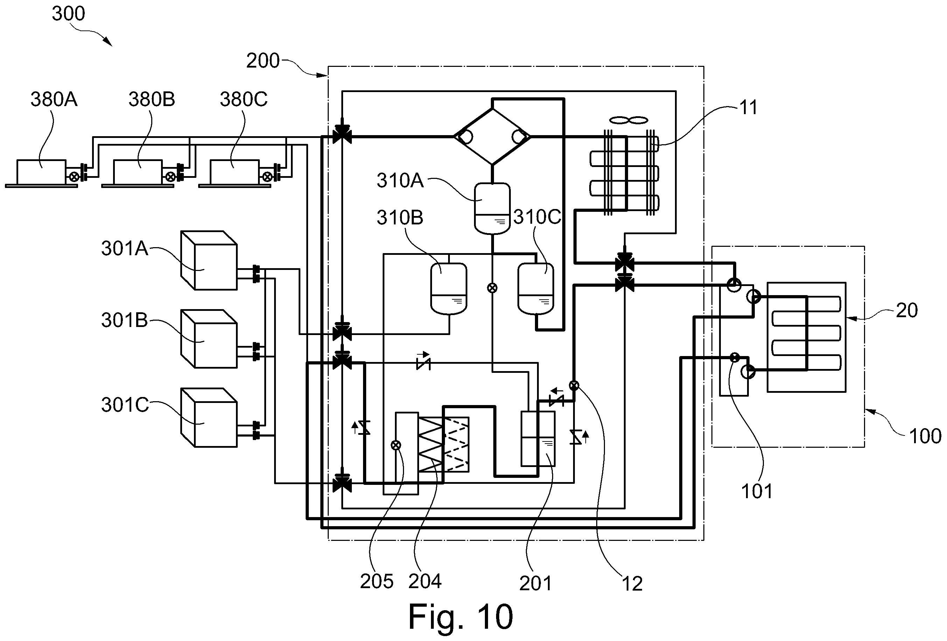

Fig. 10 is a refrigerant circuit diagram illustrating the refrigeration apparatus of Fig. 7 during an only charging operation of the thermal storage.

In this operation only the third compressor 310C and the first compressor 310A are in use, the second compressor 310B is turned off. The third compressor 310C draws the refrigerant directly from the thermal storage 20 and provides intermediate-pressure refrigerant to the first compressor which compresses the refrigerant further and discharges high-pressure refrigerant which flows to the heat-source-side heat exchanger 11, which acts as a gas cooler. The high-pressure refrigerant flowing out from the heat-source-side heat exchanger 11 flows then via the first fluid communication pipe 30 to the first switching mechanism 31. In this control mode the first valve 31A is set in such a manner that the high-pressure refrigerant flows as described above with Fig. 7 directly to the expansion device 12. From the expansion device 12 the intermediate-pressure refrigerant in a gas-liquid two-phase state (supercritical refrigerant) flows to the receiver 201 and from there liquid intermediate-pressure refrigerant flows then to the first flow path 204A of the subcooling heat exchanger 204. The refrigerant flowing into the first flow path 204A is cooled by intermediate-pressure refrigerant flowing through the second flow path 204B, and the degree of subcooling of such refrigerant is increased. The subcooled intermediate-pressure refrigerant flows then via the second valve 31B back to the thermal storage 20 and by flowing through the thermal storage 20 cools the thermal storage 20, in particular the thermal storage material, thereby charges the thermal storage with cold.

### Fifth Example: Refrigeration operation while charging the thermal storage

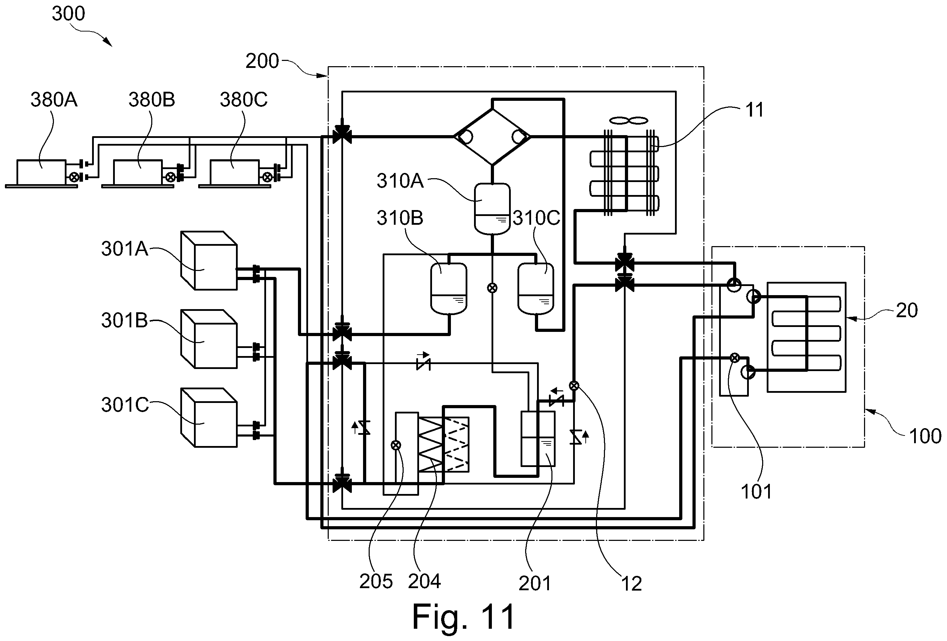

Fig. 11 is a refrigerant circuit diagram illustrating the refrigeration apparatus of Fig. 7 during a refrigeration operation while charging the thermal storage.

The refrigeration operation while charging the thermal storage is similar to the above with regard to Fig. 10 described only charging operation of the thermal storage, except that all three compressors 310A - 310C are in use and that the second compressor 310B connects the additional utilization-side heat exchangers 301A - 301C of the coolers to the refrigerant circuit 1. Thereby, it becomes possible not only to charge the thermal storage 20 with cold by flowing the subcooled intermediate-pressure refrigerant via the second valve 31B through the thermal storage 20, but also to provide the additional utilization-side heat exchangers 301A - 301C with subcooled intermediate-pressure refrigerant. Meaning, the thermal storage 20 can be charged while performing a refrigeration operation.

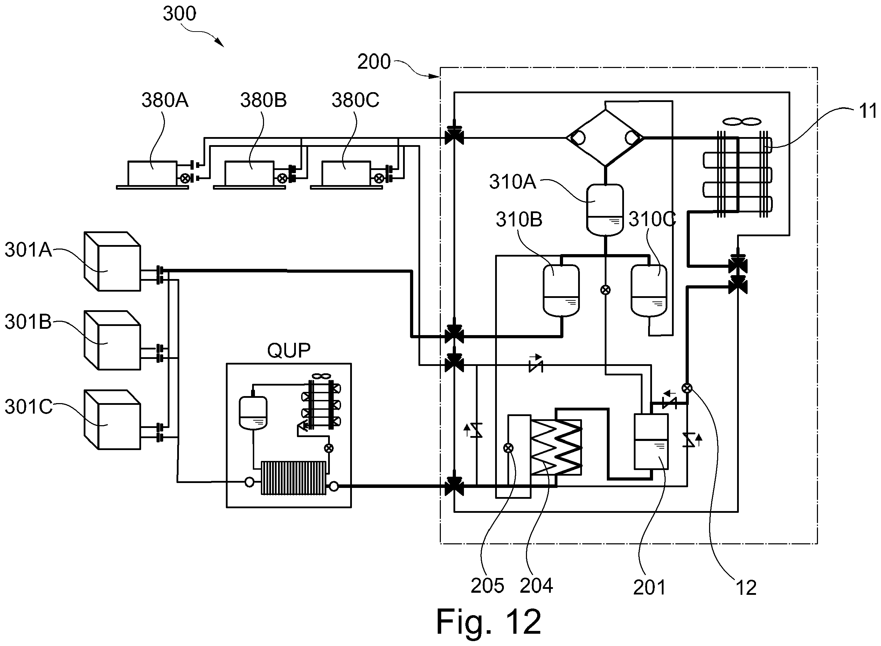

Fig. 12 is a refrigerant circuit diagram illustrating a configuration of another refrigeration apparatus 300 having a capacity increasing unit 320. The refrigerant apparatus 300 of the second embodiment mostly corresponds to the refrigerant apparatus of the first embodiment described with regard to Fig. 7. However, instead of being provided with the thermal storage unit 100, the two connecting pipes connecting the second heat exchanger unit fluid port 32B and the third heat exchanger unit fluid port 52B have an open end. Meaning, the unit connected via the second and third heat exchanger unit fluid ports 32B and 52B with the refrigerant apparatus 300, in particular with the heat exchanger unit 200, is not shown. According to the present invention, instead of the thermal storage unit 100 also a heat exchanger, particularly a plate heat exchanger, a capacity increasing unit or a combi unit including a thermal storage unit and a capacity increasing unit can be connected to the heat exchanger unit 200.

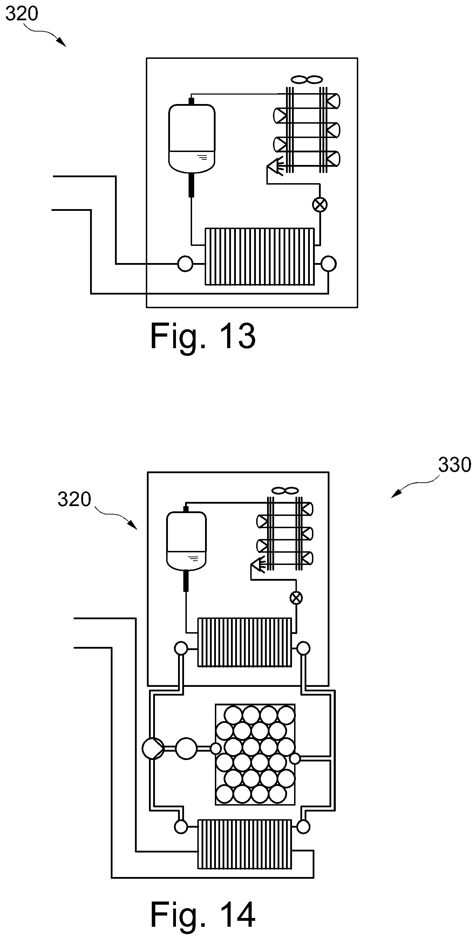

Fig. 13 is a refrigerant circuit diagram illustrating a capacity increasing unit 320. The capacity increasing unit 320 is basically an independent refrigerant circuit that can be added to or connected with the refrigerant apparatus 300, in order to increase the refrigeration and cooling capacity of the refrigerant apparatus 300. As shown in Fig. 13, the capacity increasing unit 320 includes a heat exchanger, a compressor and an expansion device which build a closed refrigerant circuit. The heat exchanger is configured to exchange heat with the heat exchanger unit 200. Therefore, the heat exchanger can be connected with the second and third heat exchanger unit fluid ports 32B and 52B. Additionally, the capacity increasing unit 320 is provided with a heat-source-side heat exchanger that cools down the refrigerant flowing there through by dissipating heat to outdoor air supplied by an outdoor fan.

Fig. 14 is a refrigerant circuit diagram illustrating a combi unit 330 having a capacity increasing unit 320 and a thermal storage unit. As described above, the capacity increasing unit 320 includes a heat exchanger, a compressor and an expansion device which build a closed refrigerant circuit. Additionally, instead of connecting the heat exchanger directly with the refrigerant apparatus 300, in particular with the heat exchanger unit 200, the thermal storage unit is arranged between the heat exchanger unit 200 and the thermal storage unit. Accordingly, the combi unit 330 additionally includes a circulating pump that circulates a refrigerant or a coolant like water, cooled by the capacity increasing unit through the thermal storage unit, in order to charge the thermal storage unit with thermal energy, particularly cold. On the other side, the thermal storage unit is provided with a heat exchanger that is used to exchange heat with the refrigerant circuit of the refrigerant apparatus 300, in particular with the heat exchanger unit 200.

Moreover, the capacity increasing unit may include a closed refrigerant circuit including a heat exchanger, a compressor, a heat-source-side heat exchanger cooled by a fan and an expansion device, wherein the heat exchanger exchanges heat with the heat exchange unit.

According to a further aspect, the combi unit may include a capacity increasing unit, comprising a closed refrigerant circuit including a heat exchanger, a compressor, a heat-source-side heat exchanger cooled by a fan and an expansion device, and a thermal storage unit comprising a heat exchanger, a thermal storage, including a thermal storage material, particularly a phase changing material (PCM), and a circulating pump, wherein the heat exchanger exchanges heat with the heat exchange unit.

### REFERENCE LIST

- 1: Refrigerant Circuit
- 10: Compressor (First Compressor)
- 11: Heat-source-side heat exchanger
- 12: Expansion Device
- 20: Thermal Storage
- 21: Thermal Storage Material
- 22: Refrigerant Heat Exchange Pipe
- 30: First Fluid Communication Pipe
- 31: First Switching Mechanism
- 40: Second Fluid Communication Pipe
- 41: Second Switching Mechanism
- 50: Third Fluid Communication Pipe
- 60: First Gas Communication Pipe
- 70: Fourth Fluid Communication Pipe 70
- 80A: Utilization-side Heat Exchanger
- 80B: Additional Utilization-side Heat Exchanger
- 90: Heat Exchange Unit Gas Communication pipe
- 92: Heat Exchange Unit Gas Port 92
- 96: First Heat Exchange Unit Fluid Port

- 100: Thermal Storage Unit
- 72: First Thermal Storage Unit Fluid Port
- 32A: Second Thermal Storage Unit Fluid Port
- 52A: Third Thermal Storage Unit Fluid Port
- 62: Thermal Storage Unit Gas Port
- 31A: First Valve
- 31B: Second Valve
- 53: Check Valve
- 101: Expansion Device
- 102: Heat Exchanger
- 103: Circulating Pump
- 200: Heat Exchanger Unit
- 96: First Heat Exchanger Unit Fluid Port
- 32B: Second Heat Exchanger Unit Fluid Port
- 52B: Third Heat Exchanger Unit Fluid Port
- 201: Receiver
- 202: Third Heat Exchanger Unit Fluid Communication Pipe
- 203: Fourth Heat Exchanger Unit Fluid Port
- 204: Subcooling Heat Exchanger
- 205: Expansion Device (Subcooling Expansion Valve)
- 206: injection pipe
- 207: high pressure pipe
- 208: high pressure pipe
- 209: expansion device
- 210: fan

- 300: Refrigeration Apparatus
- 301A - 301C: Additional Utilization-side Heat Exchanger
- 310A: First Compressor
- 310B: Second Compressor
- 310C: Third Compressor
- 320: Capacity Increasing Unit
- 330: Combi Unit
- 380A - 380C: Utilization-side Heat Exchanger

## Claims

1. A thermal storage unit (100) for a refrigeration apparatus using CO₂ as refrigerant, comprising:
a thermal storage (20) including a thermal storage material (21), particularly a phase changing material (PCM),
a thermal storage unit gas port (62) configured to communicate to a utilization-side heat exchanger (80A) disposed outside the thermal storage unit (100),
a first thermal storage unit fluid port (72) configured to communicate to the utilization-side heat exchanger (80A),
a second thermal storage unit fluid port (32A) configured to communicate to a heat-source-side heat exchanger (11), disposed outside the thermal storage unit (100), and
a third thermal storage unit fluid port (52A) configured to communicate to an expansion device (12) disposed outside the thermal storage unit (100),
wherein
the thermal storage unit (100) further comprises:
a first switching mechanism (31) communicating among the second thermal storage unit fluid port (32A), the third thermal storage fluid port (52A), the thermal storage unit gas port (62) and one side of the thermal storage (20), and
a second switching mechanism (41) communicating among the first thermal storage unit fluid port (72), the third thermal storage unit fluid port (52A) and the other side of the thermal storage (20),
wherein the thermal storage unit (100) further comprises:
a first thermal storage unit fluid communication pipe (30) communicating between the second thermal storage unit fluid port (32A) and the one side of the thermal storage (20), wherein the first switching mechanism (31) is located on the first thermal storage unit fluid communication pipe (30),
a second thermal storage unit fluid communication pipe (40) communicating between the third thermal storage unit fluid port (52A) and the other side of the thermal storage (20), wherein the second switching mechanism (41) is located on the second thermal storage unit fluid communication pipe (40), **characterised in that** the thermal storage unit (100) further comprises:
a third thermal storage unit fluid communication pipe (50) communicating between the third thermal storage unit fluid port (52A) and the first switching mechanism (31),
a fourth thermal storage unit fluid communication pipe (70) communicating between the first thermal storage unit fluid port (72) and the second switching mechanism (41).

2. The thermal storage unit (100) according to claim 1, further comprising a refrigerant heat exchange pipe (22) disposed inside the thermal storage (20), particularly inside the thermal storage material (21), wherein the first switching mechanism (31) communicates with one side of the refrigerant heat exchange pipe (22) and the second switching mechanism (41) communicates with the other end of the refrigerant heat exchange pipe (22).

3. The thermal storage unit (100) according to claim 1 or 2, wherein the first switching mechanism (31) comprises:
a first valve (31A), which is a three-way valve, communicating among the second thermal storage unit fluid port (32A), the third thermal storage unit fluid port (52A) and the thermal storage (20), and
a second valve (31B), which is a three-way valve and located between the first valve (31A) and the thermal storage (20), communicating among the first valve (31A), the thermal storage (20) and the thermal storage unit gas port (62).

4. The thermal storage unit (100) according to claim 2, wherein the first switching mechanism (31) comprises:
a first valve (31C), which is a four-way valve, communicating among the second thermal storage unit fluid port (32A), the thermal storage (20), the thermal storage unit gas port (62) and the third thermal storage unit fluid port (52A), wherein the first switching mechanism (31) further comprises a check valve (53) that stops a backflow from the third thermal storage unit fluid port (52A) to the first valve (31C).

5. The thermal storage unit (100) according to any one of the preceding claims, wherein the second switching mechanism (41) is a valve, which is a three-way valve, communicating among the first thermal storage unit fluid port (72), the third thermal storage unit fluid port (52A) and the thermal storage (20), wherein an expansion device (101) is located between the second switching mechanism (41) and the first thermal storage unit fluid port (72).

6. The thermal storage unit (100) according to any one of the preceding claims,
wherein an expansion device (101) is located on the fourth thermal storage unit fluid communication pipe (70).

7. The thermal storage unit (100) according to any of the preceding claims,
wherein a check valve (53) is located on the third thermal storage unit fluid communication pipe (50) and stops a backflow from the third thermal storage unit fluid port (52A) to the first switching mechanism (31), particularly a first valve (31A).

8. The thermal storage unit (100) according to claim 7, wherein the second thermal storage unit fluid communication pipe (40) is connected with the third thermal storage unit fluid communication pipe (50) between the third thermal storage unit fluid port (52A) and the check valve (53).

9. The thermal storage unit (100) according to any one of the preceding claims, further comprising a thermal storage unit gas communication pipe (60) communicating between the thermal storage unit gas port (62) and the first switching mechanism (31), particularly a second valve (31B).

10. The thermal storage unit (100) according to any one of the preceding claims, further comprising a heat exchanger (102), particularly a plate heat exchanger, which is on one side communicating with the first switching mechanism (31) and the second switching mechanism (41) and on the other side with the one side of the thermal storage (20) and the other side of the thermal storage (20).

11. The thermal storage unit (100) according to claim 10, further comprising a circulating pump (103) that is located on the first thermal storage unit fluid communication pipe (30) or the second thermal storage unit fluid communication pipe (40), between the heat exchanger (102) and the thermal storage (20).

12. The thermal storage unit (100) according to any one of claims 1 to 9, further comprising a water circuit, a refrigerant to phase change material (PCM) circuit or a refrigerant to water to phase change material (PCM) circuit having a heat exchanger (102), particularly a plate heat exchanger, and a circulating pump (103).

13. The thermal storage unit (100) according to claim 12, wherein when the thermal storage unit (100) comprises the refrigerant to water to phase change material (PCM) circuit, a pump speed of the circulating pump (103) is changed based on a thermal storage out temperature (T3), which is preferably detected by a thermal storage out temperature sensor provided on the second fluid communication pipe (40).

14. The thermal storage unit (100) according to any one of the preceding claims, wherein the thermal storage material is a phase changing material (PCM) from the group: organic PCMs like bio-based, paraffin, carbohydrate or lipid derived, or water.

## Patentansprüche

1. Wärmespeichereinheit (100) für eine Kühlvorrichtung, die CO₂ als Kältemittel verwendet,
umfassend:
einen Wärmespeicher (20), der ein Wärmespeichermaterial (21), insbesondere ein Phasenwechselmaterial (PCM), einschließt,
einen Wärmespeichereinheit-Gasanschluss (62), der so ausgebildet ist, dass er mit einem nutzungsseitigen Wärmetauscher (80A) kommuniziert, der außerhalb der Wärmespeichereinheit (100) angeordnet ist,
einen ersten Wärmespeichereinheit-Fluidanschluss (72), der so ausgebildet ist, dass er mit dem nutzungsseitigen Wärmetauscher (80A) kommuniziert,
einen zweiten Wärmespeichereinheit-Fluidanschluss (32A), der so ausgebildet ist, dass er mit einem wärmequellenseitigen Wärmetauscher (11) kommuniziert, der außerhalb der Wärmespeichereinheit (100) angeordnet ist, und
einen dritten Wärmespeichereinheit-Fluidanschluss (52A), der so ausgebildet ist, dass er mit einer Expansionsvorrichtung (12) kommuniziert, die außerhalb der Wärmespeichereinheit (100) angeordnet ist,
wobei
die Wärmespeichereinheit (100) weiter Folgendes umfasst:
einen ersten Schaltmechanismus (31), der zwischen dem zweiten Wärmespeichereinheit-Fluidanschluss (32A), dem dritten Wärmespeichereinheit-Fluidanschluss (52A), dem Wärmespeichereinheit-Gasanschluss (62) und einer Seite des Wärmespeichers (20) kommuniziert, und
einen zweiten Schaltmechanismus (41), der zwischen dem ersten Wärmespeichereinheit-Fluidanschluss (72), dem dritten Wärmespeichereinheit-Fluidanschluss (52A) und der anderen Seite des Wärmespeichers (20) kommuniziert,
wobei die Wärmespeichereinheit (100) weiter Folgendes umfasst:
eine erste Wärmespeichereinheit-Fluidverbindungsleitung (30), die zwischen dem zweiten Wärmespeichereinheit-Fluidanschluss (32A) und der einen Seite des Wärmespeichers (20) kommuniziert, wobei der erste Schaltmechanismus (31) an der ersten Wärmespeichereinheit-Fluidverbindungsleitung (30) gelegen ist,
eine zweite Wärmespeichereinheit-Fluidverbindungsleitung (40), die zwischen dem dritten Wärmespeichereinheit-Fluidanschluss (52A) und der anderen Seite des Wärmespeichers (20) kommuniziert, wobei der zweite Schaltmechanismus (41) an der zweiten Wärmespeichereinheit-Fluidverbindungsleitung (40) gelegen ist,
**dadurch gekennzeichnet, dass** die Wärmespeichereinheit (100) weiter Folgendes umfasst:
eine dritte Wärmespeichereinheit-Fluidverbindungsleitung (50), die zwischen dem dritten Wärmespeichereinheit-Fluidanschluss (52A) und dem ersten Schaltmechanismus (31) kommuniziert,
eine vierte Wärmespeichereinheit-Fluidverbindungsleitung (70), die zwischen dem ersten Wärmespeichereinheit-Fluidanschluss (72) und dem zweiten Schaltmechanismus (41) kommuniziert.

2. Wärmespeichereinheit (100) nach Anspruch 1, weiter umfassend eine Kältemittel-Wärmetauscherleitung (22), die innerhalb des Wärmespeichers (20), insbesondere innerhalb des Wärmespeichermaterials (21), angeordnet ist, wobei der erste Schaltmechanismus (31) mit einer Seite der Kältemittel-Wärmetauscherleitung (22) kommuniziert und der zweite Schaltmechanismus (41) mit dem anderen Ende der Kältemittel-Wärmetauscherleitung (22) kommuniziert.

3. Wärmespeichereinheit (100) nach Anspruch 1 oder 2, wobei der erste Schaltmechanismus (31) Folgendes umfasst:
ein erstes Ventil (31A), bei dem es sich um ein Dreiwegeventil handelt, das zwischen dem zweiten Wärmespeichereinheit-Fluidanschluss (32A), dem dritten Wärmespeichereinheit-Fluidanschluss (52A) und dem Wärmespeicher (20) kommuniziert, und
ein zweites Ventil (31B), bei dem es sich um ein Dreiwegeventil handelt und das zwischen dem ersten Ventil (31A) und dem Wärmespeicher (20) gelegen ist und zwischen dem ersten Ventil (31A), dem Wärmespeicher (20) und dem Wärmespeichereinheit-Gasanschluss (62) kommuniziert.

4. Wärmespeichereinheit (100) nach Anspruch 2, wobei der erste Schaltmechanismus (31) Folgendes umfasst:
ein erstes Ventil (31C), bei dem es sich um ein Vierwegeventil handelt, das zwischen dem zweiten Wärmespeichereinheit-Fluidanschluss (32A), dem Wärmespeicher (20), dem Wärmespeichereinheit-Gasanschluss (62) und dem dritten Wärmespeichereinheit-Fluidanschluss (52A) kommuniziert, wobei der erste Schaltmechanismus (31) weiter ein Rückschlagventil (53) umfasst, das einen Rückfluss von dem dritten Wärmespeichereinheit-Fluidanschluss (52A) zu dem ersten Ventil (31C) verhindert.

5. Wärmespeichereinheit (100) nach einem der vorstehenden Ansprüche,
wobei der zweite Schaltmechanismus (41) ein Ventil ist, bei dem es sich um ein Dreiwegeventil handelt, das zwischen dem ersten Wärmespeichereinheit-Fluidanschluss (72), dem dritten Wärmespeichereinheit-Fluidanschluss (52A) und dem Wärmespeicher (20) kommuniziert, wobei eine Expansionsvorrichtung (101) zwischen dem zweiten Schaltmechanismus (41) und dem ersten Wärmespeichereinheit-Fluidanschluss (72) gelegen ist.

6. Wärmespeichereinheit (100) nach einem der vorstehenden Ansprüche,
wobei eine Expansionsvorrichtung (101) an der vierten Wärmespeichereinheit-Fluidverbindungsleitung (70) gelegen ist.

7. Wärmespeichereinheit (100) nach einem der vorstehenden Ansprüche,
wobei ein Rückschlagventil (53) an der dritten Wärmespeichereinheit-Fluidverbindungsleitung (50) gelegen ist und einen Rückfluss von dem dritten Wärmespeichereinheit-Fluidanschluss (52A) zu dem ersten Schaltmechanismus (31), insbesondere einem ersten Ventil (31A), verhindert.

8. Wärmespeichereinheit (100) nach Anspruch 7, wobei die zweite Wärmespeichereinheit-Fluidverbindungsleitung (40) mit der dritten Wärmespeichereinheit-Fluidverbindungsleitung (50) zwischen dem dritten Wärmespeichereinheit-Fluidanschluss (52A) und dem Rückschlagventil (53) verbunden ist.

9. Wärmespeichereinheit (100) nach einem der vorstehenden Ansprüche, weiter umfassend eine Wärmespeichereinheit-Gasverbindungsleitung (60), die zwischen dem Wärmespeichereinheit-Gasanschluss (62) und dem ersten Schaltmechanismus (31), insbesondere einem zweiten Ventil (31B), kommuniziert.

10. Wärmespeichereinheit (100) nach einem der vorstehenden Ansprüche, weiter umfassend einen Wärmetauscher (102), insbesondere einen Plattenwärmetauscher, der einerseits mit dem ersten Schaltmechanismus (31) und dem zweiten Schaltmechanismus (41) und andererseits mit der einen Seite des Wärmespeichers (20) und der anderen Seite des Wärmespeichers (20) kommuniziert.

11. Wärmespeichereinheit (100) nach Anspruch 10, weiter umfassend eine Umwälzpumpe (103), die an der ersten Wärmespeichereinheit-Fluidverbindungsleitung (30) oder der zweiten Wärmespeichereinheit-Fluidverbindungsleitung (40) zwischen dem Wärmetauscher (102) und dem Wärmespeicher (20) gelegen ist.

12. Wärmespeichereinheit (100) nach einem der Ansprüche 1 bis 9,
weiter umfassend ein Wasserkreislauf, ein Kältemittel-Phasenwechselmaterial (PCM)-Kreislauf oder ein Kältemittel-Wasser-Phasenwechselmaterial (PCM)-Kreislauf, der einen Wärmetauscher (102), insbesondere einen Plattenwärmetauscher aufweist, und eine Umwälzpumpe (103).

13. Wärmespeichereinheit (100) nach Anspruch 12, wobei, wenn die Wärmespeichereinheit (100) den Kältemittel-Wasser-Phasenwechselmaterial (PCM)-Kreislauf umfasst, eine Pumpendrehzahl der Umwälzpumpe (103) auf der Grundlage einer Wärmespeicher-Ausgangstemperatur (T3) geändert wird, die vorzugsweise durch einen Wärmespeicher-Ausgangstemperatursensor erfasst wird, der an der zweiten Fluidverbindungsleitung (40) vorgesehen ist.

14. Wärmespeichereinheit (100) nach einem der vorstehenden Ansprüche, wobei das Wärmespeichermaterial ein Phasenwechselmaterial (PCM) aus der folgenden Gruppe ist: organische PCMs, wie biobasierte, Paraffin, von Kohlenhydraten oder Lipiden abgeleitete oder Wasser.

## Revendications

1. Unité de stockage thermique (100) pour un appareil de réfrigération utilisant du CO₂ comme réfrigérant,
comprenant :
un stockage thermique (20) incluant un matériau de stockage thermique (21), en particulier un matériau à changement de phase (MCP),
un port de gaz d'unité de stockage thermique (62) configuré de manière à communiquer avec un échangeur de chaleur côté utilisation (80A) agencé à l'extérieur de l'unité de stockage thermique (100),
un premier port de fluide d'unité de stockage thermique (72) configuré de manière à communiquer avec l'échangeur de chaleur côté utilisation (80A),
un deuxième port de fluide d'unité de stockage thermique (32A) configuré de manière à communiquer avec un échangeur de chaleur côté source de chaleur (11), agencé à l'extérieur de l'unité de stockage thermique (100), et
un troisième port de fluide d'unité de stockage thermique (52A) configuré de manière à communiquer avec un dispositif d'expansion (12) agencé à l'extérieur de l'unité de stockage thermique (100),
dans laquelle
l'unité de stockage thermique (100) comprend en outre :
un premier mécanisme de commutation (31) qui établit une communication parmi le deuxième port de fluide d'unité de stockage thermique (32A), le troisième port de fluide de stockage thermique (52A), le port de gaz d'unité de stockage thermique (62) et un premier côté du stockage thermique (20), et
un second mécanisme de commutation (41) qui établit une communication parmi le premier port de fluide d'unité de stockage thermique (72), le troisième port de fluide d'unité de stockage thermique (52A) et l'autre côté du stockage thermique (20),
dans laquelle l'unité de stockage thermique (100) comprend en outre :
un premier tuyau de communication de fluide d'unité de stockage thermique (30) qui établit une communication entre le deuxième port de fluide d'unité de stockage thermique (32A) et le premier côté du stockage thermique (20), dans laquelle le premier mécanisme de commutation (31) est situé sur le premier tuyau de communication de fluide d'unité de stockage thermique (30),
un deuxième tuyau de communication de fluide d'unité de stockage thermique (40) qui établit une communication entre le troisième port de fluide d'unité de stockage thermique (52A) et l'autre côté du stockage thermique (20), dans laquelle le second mécanisme de commutation (41) est situé sur le deuxième tuyau de communication de fluide d'unité de stockage thermique (40),
**caractérisée en ce que** l'unité de stockage thermique (100) comprend en outre :
un troisième tuyau de communication de fluide d'unité de stockage thermique (50) qui établit une communication entre le troisième port de fluide d'unité de stockage thermique (52A) et le premier mécanisme de commutation (31),
un quatrième tuyau de communication de fluide d'unité de stockage thermique (70) qui établit une communication entre le premier port de fluide d'unité de stockage thermique (72) et le second mécanisme de commutation (41).

2. Unité de stockage thermique (100) selon la revendication 1, comprenant en outre un tuyau d'échange de chaleur à réfrigérant (22) agencé à l'intérieur du stockage thermique (20), en particulier à l'intérieur du matériau de stockage thermique (21), dans laquelle le premier mécanisme de commutation (31) communique avec un premier côté du tuyau d'échange de chaleur à réfrigérant (22) et le second mécanisme de commutation (41) communique avec l'autre extrémité du tuyau d'échange de chaleur à réfrigérant (22).

3. Unité de stockage thermique (100) selon la revendication 1 ou la revendication 2, dans laquelle le premier mécanisme de commutation (31) comprend :
une première vanne (31A), qui est une vanne à trois voies, qui établit une communication parmi le deuxième port de fluide d'unité de stockage thermique (32A), le troisième port de fluide d'unité de stockage thermique (52A) et le stockage thermique (20), et
une seconde vanne (31B), qui est une vanne à trois voies et située entre la première vanne (31A) et le stockage thermique (20), qui établit une communication parmi la première vanne (31A), le stockage thermique (20) et le port de gaz d'unité de stockage thermique (62).

4. Unité de stockage thermique (100) selon la revendication 2, dans laquelle le premier mécanisme de commutation (31) comprend :
une première vanne (31C) qui est une vanne à quatre voies, qui établit une communication parmi le deuxième port de fluide d'unité de stockage thermique (32A), le stockage thermique (20), le port de gaz d'unité de stockage thermique (62) et le troisième port de fluide d'unité de stockage thermique (52A), dans laquelle le premier mécanisme de commutation (31) comprend en outre un clapet anti-retour (53) qui arrête un reflux du troisième port de fluide d'unité de stockage thermique (52A) vers la première vanne (31C).

5. Unité de stockage thermique (100) selon l'une quelconque des revendications précédentes,
dans laquelle le second mécanisme de commutation (41) est une vanne, qui est une vanne à trois voies, qui établit une communication parmi le premier port de fluide d'unité de stockage thermique (72), le troisième port de fluide d'unité de stockage thermique (52A) et le stockage thermique (20), dans laquelle un dispositif d'expansion (101) est situé entre le second mécanisme de commutation (41) et le premier port de fluide d'unité de stockage thermique (72).

6. Unité de stockage thermique (100) selon l'une quelconque des revendications précédentes,
dans laquelle un dispositif d'expansion (101) est situé sur le quatrième tuyau de communication de fluide d'unité de stockage thermique (70).

7. Unité de stockage thermique (100) selon l'une quelconque des revendications précédentes,
dans laquelle un clapet anti-retour (53) est situé sur le troisième tuyau de communication de fluide d'unité de stockage thermique (50) et arrête un reflux du troisième port de fluide d'unité de stockage thermique (52A) vers le premier mécanisme de commutation (31), en particulier une première vanne (31A).

8. Unité de stockage thermique (100) selon la revendication 7, dans laquelle le deuxième tuyau de communication de fluide d'unité de stockage thermique (40) est raccordé au troisième tuyau de communication de fluide d'unité de stockage thermique (50) entre le troisième port de fluide d'unité de stockage thermique (52A) et le clapet anti-retour (53).

9. Unité de stockage thermique (100) selon l'une quelconque des revendications précédentes, comprenant en outre un tuyau de communication de gaz d'unité de stockage thermique (60) qui établit une communication entre le port de gaz d'unité de stockage thermique (62) et le premier mécanisme de commutation (31), en particulier une seconde vanne (31B).

10. Unité de stockage thermique (100) selon l'une quelconque des revendications précédentes, comprenant en outre un échangeur de chaleur (102), en particulier un échangeur de chaleur à plaques, qui communique d'un côté avec le premier mécanisme de commutation (31) et le second mécanisme de commutation (41) et de l'autre côté avec le premier côté du stockage thermique (20) et l'autre côté du stockage thermique (20).

11. Unité de stockage thermique (100) selon la revendication 10, comprenant en outre une pompe de circulation (103) qui est située sur le premier tuyau de communication de fluide d'unité de stockage thermique (30) ou sur le deuxième tuyau de communication de fluide d'unité de stockage thermique (40), entre l'échangeur de chaleur (102) et le stockage thermique (20).

12. Unité de stockage thermique (100) selon l'une quelconque des revendications 1 à 9,
comprenant en outre un circuit d'eau, un circuit de matériau à changement de phase (MCP)-réfrigérant ou un circuit de matériau à changement de phase (MCP)-réfrigérant-eau présentant un échangeur de chaleur (102), en particulier un échangeur de chaleur à plaques, et une pompe de circulation (103).

13. Unité de stockage thermique (100) selon la revendication 12, dans laquelle, lorsque l'unité de stockage thermique (100) comprend le circuit de matériau à changement de phase (MCP)-réfrigérant-eau, une vitesse de pompe de la pompe de circulation (103) est modifiée sur la base d'une température de sortie (T3) de stockage thermique, qui est de préférence détectée par un capteur de température de sortie de stockage thermique prévu sur le deuxième tuyau de communication de fluide (40).

14. Unité de stockage thermique (100) selon l'une quelconque des revendications précédentes, dans laquelle le matériau de stockage thermique est un matériau à changement de phase (MCP) du groupe comprenant : des MCP organiques tels que ceux d'origine biologique, la paraffine ou ceux dérivés d'un hydrate de carbone ou d'un lipide, ou l'eau.
